Europäisches Patentamt

European Patent Office

Office européen des brevets

(11) Publication number: **0 091 880**
**B1**

## EUROPEAN PATENT SPECIFICATION

(45) Date of publication of patent specification: **20.08.86**

(51) Int. Cl.⁴: **G 01 L 1/12**

(21) Application number: **83710009.8**

(22) Date of filing: **17.03.83**

(54) Temperature-compensated magnetoelastic force measuring means.

(30) Priority: **24.03.82 SE 8201869**

(43) Date of publication of application:
**19.10.83 Bulletin 83/42**

(45) Publication of the grant of the patent:
**20.08.86 Bulletin 86/34**

(84) Designated Contracting States:
**DE FR GB IT**

(56) References cited:
**DE-C- 955 272**

(73) Proprietor: **ASEA AB**
**S-721 83 Västeras (SE)**

(72) Inventor: **Valdemarsson, Stefan, Dipl.-Ing.**
**Heimersväg 18**
**S-723 55 Västeras (SE)**

(74) Representative: **Boecker, Joachim, Dr.-Ing.**
**Rathenauplatz 2-8**
**D-6000 Frankfurt a.M. 1 (DE)**

Courier Press, Leamington Spa, England.

## Description

The invention relates to a temperature-compensated magnetoelastic force measuring means according to the precharacterising part of claim 1. Such a force measuring means is known e.g. from DE—A—2 756 701.

Magnetoelastic force measuring means are previously known, for example from SE—B—151.267. These force measuring means comprise a transducer which has a core with an excitation winding, supplied with alternating current, and a measuring winding. The voltage induced in the measuring winding is usually rectified, suitably by means of a phase-sensitive rectifier, and the magnitude of the rectified voltage constitutes a measure of the mechanical force applied to the transducer.

A disadvantage with certain transducers of the above-mentioned kind is, however, that the temperature dependence of the sensitivity renders difficult or impossible measurement with very high precision.

The invention aims at developing a magnetoelastic force measuring means of the above-mentioned kind which exhibits in extremely high temperature independence.

In order to achieve this aim the invention suggests a magnetoelastic force measuring means according to the preamble of claim 1 which is characterized by the features stated in the characterizing portion of claim 1.

Alternative embodiments and further particulars of the invention are characterized by the features of the subsequent claims.

The invention will now be described in greater detail with reference to the accompanying drawings in which:

Figure 1 shows the principle of a force transducer to which the invention may be applied,

Figure 2 shows an embodiment of the transducer according to Figure 1, in which the measuring beam is subjected to a tensile stress,

Figure 3 shows a transducer having two symmetrically arranged measuring portions,

Figure 4 shows an embodiment of a reference transducer according to the invention,

Figure 5 shows an embodiment of the spring element for the transducer according to Figure 4,

Figure 6 shows an embodiment of the signal processing circuit in a force measuring means according to the invention,

Figure 7 shows the output signals from the measuring and reference transducers as a function of, among other things, the temperature.

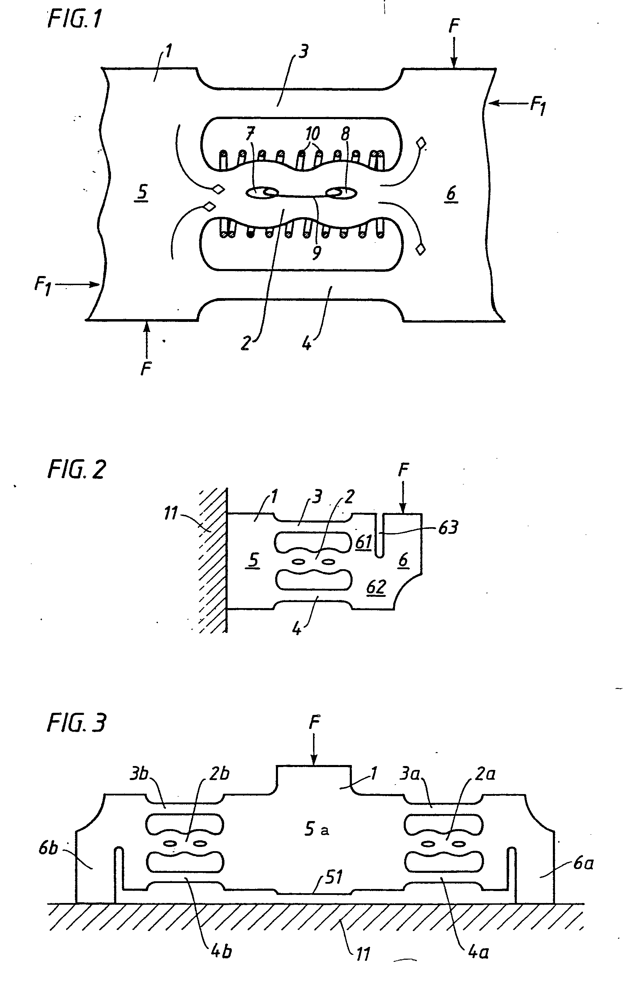

The magnetoelastic force transducer in Figure 1 has a laminated or possibly solid core 1 of a suitable magnetic material. The core has two side portions 5 and 6, which are connected to each other by three beams 2, 3, 4. The central beam 2 has two holes 7, 8 in which a measuring winding 9 is inserted (illustrated by only one turn in Figure 1). In the region of the holes, the beam is provided with wider portions in such a way that the cross-section of the beam is substantially constant along the entire length of the beam. The beam is surrounded by an excitation winding 10 which is supplied with alternating current. This current generates an axial alternating flux through the beam. The side portions 5 and 6 and the beams 3 and 4 serve as return paths for the flux (marked with arrows in the figure). In unloaded state, equally large portions of the flux through the beam 2 will pass respectively below and above each hole 7, 8. No flux will flow through the measuring winding and the output signal of the transducer, i.e. the voltage induced in the measuring winding is zero.

When the transducer is loaded with a couple of forces F (and the reaction forces $F_1$) according to Figure 1, the beams 2, 3 and 4 will be deformed and will acquire a double-curved shape with a point of inflection in the mid-portion. In the beam 2 tensile stresses are obtained in the regions above the hole 7 and below the hole 8 and compressive stresses are obtained in the regions below the hole 7 and above the hole 8. The magnetic resistance of the core material is changed in one direction — for example is reduced — in case of tensile stress and in the other direction — is increased — in case of compressive stress, which implies that, upon loading of the transducer, part of the flux in the beam 2 will pass through the measuring winding 9 and induce therein an alternating voltage which constitutes the output signal. Since the output signal is caused to the same extent by core portions subjected to compressive stresses and by core portions subjected to tensile stresses, the linearity of the output signal — as described in more detail in SE—A—405 766 — will be better than if the signal is derived from regions with compressive stress only or from regions with tensile stress only.

In the transducer shown in Figure 1, the force on the beam 2 in its longitudinal direction is zero. It has been found that by designing the transducer in such a way that the beam 2 is subjected to a force in its longitudinal direction which is proportional to the force F, it is possible to improve the linearity of the transducer further. Figure 2 shows an embodiment in which the right-hand side portion of the core 1 is provided with a vertical slot 63. The side portion 6 is thereby divided into two portions 61 and 62. Portion 61 above the beam 2 has smaller width and stiffness than a portion 62 below the beam 2. In this way, an applied force F will cause a tensile force in the beam 2 which is proportional to the force F. By a suitable design and dimensioning, the proportionality factor between the force F and the force on the beam 2 may be adjusted so that very good linearity is obtained.

The transducer described presents considerable advantages in relation to prior art magnetoelastic transducers, namely:

The zero signal is very low, i.e. the output signal of the transducer is substantially zero when no force is applied.

Good linearity. The output signal of the transducer follows with high accuracy the function u = const x F. The output signal is free of any creep or hysteresis.

Figure 3 shows a preferred embodiment of the transducer according to Figures 1 and 2. The core 1 is provided with a central portion 5a on which the force F to be measured is applied. On either side of this portion the core has a measuring portion 2a—6a and 2b—6b, respectively, the two measuring portions being of identical kind. They may be constructed in the manner shown in Figures 1 and 2. For the sake of clarity the windings are not shown in Figure 3. The transducer rests with its force-applying portions 6a and 6b for the reaction forces on a base 11. The mode of operation corresponds to that described with reference to Figures 1 and 2. The central portion 5a has a projection 51 protruding towards the base 11 and ending at such a distance from the base 11 that, from a certain value of the force F, the projection will abut against the base, thereby protecting the transducer against mechanical overload.

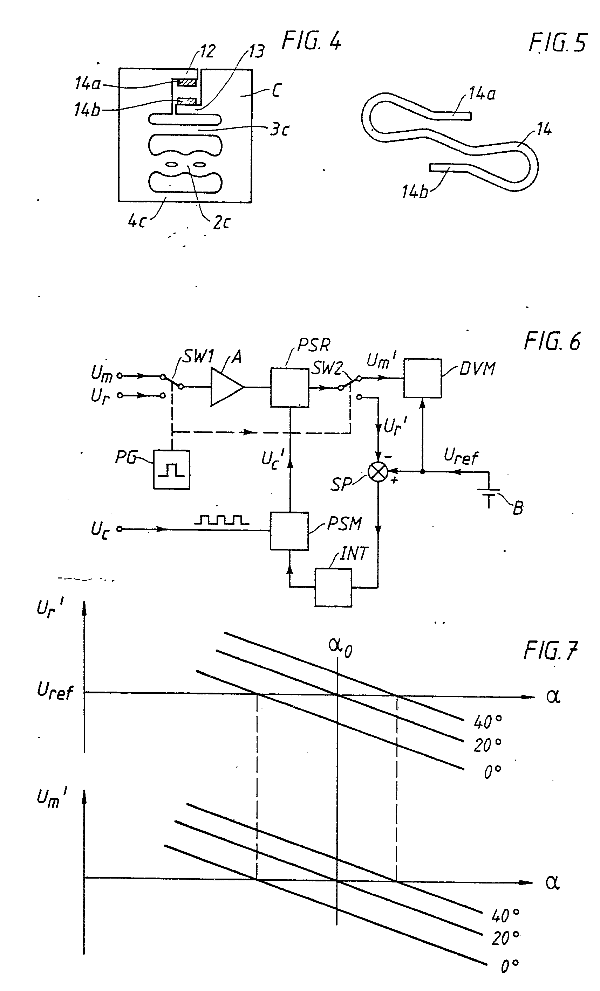

According to the invention, at least one reference transducer C is arranged, for example according to Figure 4.

The measuring portion 2c, 3c, 4c of the reference transducer is exactly the same as each one of the measuring portions of the core 1 in Figure 3, but in addition it is designed with force application arms 12, 13 so that it can be loaded with a constant force by means of a spring 14 inserted between the arms. To prevent this force from changing with the temperature, the coefficient of elasticity of the spring material must be approximately temperature-independent, except for a slight change with the temperature which compensates for the difference in linear expansion between the spring (14) and the force application arms (12, 13). With a suitable heat treatment, material of Elinvar type can be given this property.

The reference transducer is attached to the side of and adjacent the measuring portion of the measuring transducer, preferably in metallic contact therewith, so as to ensure good temperature conformity but without causing any force shunting. Both transducers are excited alike, for example by series-connecting their excitation windings or by providing both transducers with a common excitation winding. Both transducers preferably have similar secondary windings.

Thus, in the transducer shown in Figure 2, one single reference transducer can be arranged. In the transducer shown in Figure 3, suitably two reference transducers can be arranged, one for each measuring portion, to ensure the greatest possible temperature conformity.

To achieve a constant force from the spring of the reference transducer it is not sufficient that the material of the spring has the above-mentioned temperature properties. In addition, the shape of the spring must be chosen in such a way that its surfaces which are pressed against the force application surfaces of the reference transducer move in parallel during compression to make possible a good contact with said transducer surfaces and a good force distribution between the different sheets from which the reference transducer is built up. From this viewpoint, a double-curved, symmetrical, S-shaped leaf spring having plane and parallel contact surfaces is an ideal solution. To reduce the necessary space for the spring in the reference transducer, the shape has been compressed vertically into a spring of the shape as shown in Figure 5. The spring 14 is arranged perpendicularly to the plane of the paper in Figure 4, in which only the legs 14a and 14b of the springs are shown, which are seen in cross-section.

The principle of the signal processing is shown in Figure 6. The signal $U_m$ from the measuring transducer and the signal $U_r$ from the reference transducer are alternately connected to an amplifier A with a subsequently connected phase-sensitive (phase-controlled) rectifier PSR. The switching is symbolically indicated by the switch SW1. The switch SW1, as well as the switch SW2, are controlled by a control device PG in such a way that the reference transducer signal is only connected to the rectifier PSR for a calibrating period of, for example, a few tenths of a second every twentieth second. The rectified signal $U_r$ is forwarded via the symbolically shown switch SW2 to the negative input of a difference generator SP, to the positive input of which a reference direct voltage $U_{ref}$ from a direct voltage source B is connected. Via an integrator INT, the output signal of the difference generator is supplied to the control input of a phase shift device PSM, to which there is also supplied a reference alternating voltage $U_c$. This voltage has the same frequency as and a fixed phase position in relation to the alternating current supplied to the excitation windings of the transducers. The output signal of the integrator controls the phase shift in the device PSM and thus the phase angle $\alpha$ of the phase-sensitive rectifier PSR so that the output voltage $U_r'$ of the rectifier becomes equal to $U_{ref}$. Thus, by the control of the phase angle $\alpha$, the resultant signal amplification is adjusted during the calibrating periods in such a way that the temperature dependence of the sensitivity is compensated for. When, after each calibrating period, the measuring transducer is switched in, the integrator maintains the phase angle unchanged. When the measuring portion of the reference transducer — apart from the thickness — is identical with the measuring portion of the measuring transducer, the compensation applies also to the measuring transducer. A prerequisite for this identity is, of course, that the magnetoelastic properties are equal in the sheet material of the two transducers. To ensure that this is the case, the material should be selected from adjacent portions of the same sheet.

The temperature-compensated measuring signal $U_m'$ is finally displayed on a digital voltmeter DVM, which also receives its reference voltage from $U_{ref}$, whereby a small variation of $U_{ref}$ is compensated in the digital display.

The compensation of the temperature dependence of the transducer is illustrated in Figure 7.

After amplification and phase-sensitive rectification with a fixed phase angle $a_0$, of the two transducer signals $U_m$ and $U_r$, the direct voltages $U_m'$ and $U_r'$ are obtained, which, like the transducer signals, show a certain temperature dependence — here illustrated for the temperatures 0°, 20° and 40°C. By means of the described signal processing equipment, the phase angle $a$ is changed during the calibrating period so that $U_r'$ becomes equal to the constant reference voltage $U_{ref}$, independently of the temperature of the reference transducer. Then when the phase angle is maintained unchanged during the measuring period, also $U_m'$ will become independent of the temperature, since the temperature of the measuring transducer, due to good metallic contact, is equal to that of the reference transducer.

Although the invention has sprung from the need for temperature compensation of the transducers, its effect is not limited thereto. Thus, variations in the amplitude and frequency of the supply current are compensated at the same time and in the same manner.

A further advantage of the compensation according to the invention is that the demands on the amplifier A are not at all so extremely severe as regards the stability of sensitivity as is otherwise the case during precision measurement. A sensitivity drift of the amplifier A is here compensated for in the same way as the temperature dependence of the transducer, and this also applies to the phase sensitive rectifier.

The embodiment according to Figure 6 is designed with one series connection of a rectifier PSR and an amplifier A only. Instead of one such branch, which is alternately used for the measuring signal and the calibrating signal (time multiplexing), two identical separate branches may be employed one continuously transferring the measuring signal $U_m$ and one continuously processing the calibrating signal $U_r$ via the loop SP, INT, PSM. The output signal $U_c'$ of the phase shift device PSM is then continuously adjusting the two identical rectifiers PSR. However, in this embodiment of the invention a deviation in the temperature dependence of the two branches A, PSR will remain uncompensated for by the regulating loop.

Instead of having one or two phase controlled rectifiers PSR for the adjustment of the signals, it is possible to employ a rectifier with a constant relation between input and output signal along with an adjustable amplifier A which is controlled by a suitable regulator (PSM, INT) in the regulating loop. However, using the rectifier as the controllable unit has the advantage of a higher linearity between the force to be measured and the measuring value in case that the temperature deviates from the temperature value for which the measuring means has been optimised by design.

**Claims**

1. Temperature-compensated magnetoelastic force measuring means comprising a measuring transducer (2—6, 2a—6a, 2b—6b) with a core member (1), carrying at least one excitation winding (10) and one measuring winding (9), and comprising a signal processing circuit, characterized in that the force measuring means comprises a reference transducer (C) made of the same material as the measuring transducer and having the same outline, length and breadth as the measuring transducer with the exception of additional force application arms (12, 13), in that a spring (14, 14a, 14b) is arranged between said .additional force application arms to load the reference transducer (C) with a force which is constant with respect to temperature changes, in that the reference transducer (C) is arranged in good thermal contact with the measuring transducer (1) so as to ensure that the two transducers are at the same temperature, that the or each excitation winding (10) is arranged to supply the two transducers with the same magnetic field, in that the signal processing circuit includes at least one controllable amplifying component (A, PSR), and in that the signal processing circuit is constructed in such a manner that, at least during a calibrating period, the output signal ($U_r$) of the reference transducer (C) is supplied to a controllable amplifying component (A, PSR) whereby the output signal ($U_r'$) of said component (A, PSR) is compared with a reference voltage ($U_{ref}$) from a reference voltage source (B) in a difference generator (SP), that the deviation signal from the difference generator (SP) is supplied to a regulator (INT, PSM), which controls said controllable component (A, PSR), so, as to bring the output signal ($U_r'$) of that component (A, PSR) into conformity with the reference voltage ($U_{ref}$), and that, at least during a measuring period, the output signal ($U_m$) of the measuring transducer is supplied to a controllable amplifying component (A, PSR), which is controlled by the output signal ($U_c'$) of that regulator (INT, PSM), whereby the output signal ($U_m'$) constitutes the temperature-compensated measuring value.

2. Force measuring means according to claim 1, characterized in that a suitable switching means (SW1) is arranged to connect the output signals of the reference transducer (C) and the measuring transducer alternately to the same controllable component (A, PSR), in that a control member (PG) is arranged to control the alternation between said signals, in that further switch means (SW2) is arranged to connect, during the calibrating periods, the output signal ($U_r'$) of said component (A, PSR) to the difference generator (SP) and in that the regulator (INT, PSM) is designed so that its output signal ($U_c'$), obtained during a calibrating period, is maintained for the next measuring period, during which the output signal ($U_m'$) of the controllable component (A, PSR) is arranged to be supplied to a member (DVM) for indicating or further processing of the signal.

3. Force measuring means according to claim 1 or 2, characterized in that said controllable component (A, PSR) consists of an amplifier (A) and a successively connected phase-sensitive rectifier (PSR), and in that the regulator (PSM, INT) and said controllable component (A, PSR) are designed so that the output-signal (U$_c$') of the regulator (PSM, INT) during the calibrating periods controls the phase position in said phase-sensitive rectifier so as to make the output-signal (U$_r$') of the rectifier equal to the reference voltage (U$_{ref}$).

4. Force measuring means according to claim 1, characterized in that the spring (14) is of leaf spring type, and has the shape of an "S" which is highly compressed in the vertical direction and has plane and parallel contact surfaces bearing against opposite surfaces of the force application arms (12, 13) of the reference transducer core.

5. Force measuring means according to claim 4, characterized in that the spring (14) is made of a material of Elinvar type which, by means of a suitable heat treatment, is given a slightly temperature-dependent modulus of elasticity, which compensates for the difference in linear expansion between the spring (14) and the force application arms (12, 13).

**Patentansprüche**

1. Temperaturkompensierte magnetoelastische Krafmeßanordnung, die einen Meßgeber (2—6, 2a—6a, 2b—6b) enthält mit einem Kern (1), der mindestens eine Erregerwicklung (10) und eine Meßwicklung (9) trägt, und zu dem eine Signalverarbeitungsschaltung gehört, dadurch gekennzeichnet, daß die Krafmeßanordnung einen Referenzgeber (C) enthält, der aus dem gleichen Material wie der Meßgeber besteht und der dieselbe Form, Länge und Breite wie der Meßgeber hat mit Ausnahme zusätzlicher Krafteinleitungsarme (12, 13), daß eine Feder (14, 14a, 14b) zwischen den genannten zusätzlichen Krafteinleitungsarmen angeordnet ist, um den Referenzgeber (C) mit einer Kraft zu beaufschlagen, deren Größe von Temperaturänderungen unabhängig ist, daß der Referenzgeber (C) derart in gutem thermischem Kontakt mit dem Meßgeber (1) angeordnet ist, daß eine gleiche Temperatur beider Geber sichergestellt ist, daß die Erregerwicklung(en) (10) derart angeordnet ist/sind, daß die magnetischen Felder beider Geber gleich sind, daß die Signalverarbeitungsschaltung mindestens ein steuerbares verstärkendes Glied (A, PSR) enthält und daß die Signalverarbeitungsschaltung in einer solchen Weise aufgebaut ist, daß zumindest während einer Eichperiode das Ausgangssignal (U$_r$) des Referenzgebers (C) einem steuerbaren verstärkenden Glied (A, PSR) zugeführt wird, wobei das Ausgangssignal (U$_r$') des genannten steuerbaren verstärkenden Gliedes (A, PSR) mit einer Referenzspannung (U$_{ref}$) einer Bezugsspannungsquelle (B) in einem Subtraktionsglied (SP) verglichen wird, daß das Diferenzsignal des Subtraktionsgliedes (SP) einem Regler (INT, PSM) zugeführt wird, der das genannte steuerbare verstärkende Glied (A, PSR) derart steuert, daß das Ausgangssignal (U$_r$') des genannten Gliedes (A, PSR) in Übereinstimmung mit der Referenzspannung (U$_{ref}$) gebracht wird, und daß zumindest während einer Meßperiode das Ausgangssignal (U$_m$') des Meßgebers einem steuerbaren verstärkenden Glied (A, PSR) zugeführt wird, welches von dem Ausgangssignal (U$_c$') des Reglers (INT, PSM) gesteuert wird, wobei das Ausgangssignal (U$_m$') einen temperaturkompensierten Meßwert bildet.

2. Krafmeßanordnung nach Anspruch 1, dadurch gekennzeichnet, daß eine geeignete Schalteinrichtung (SW1) vorhanden ist, welche die Ausgangssignale des Referenzgebers (C) und des Meßgeber abwechselnd auf dasselbe steuerbare Glied (A, PSR) schaltet, daß ein Steuerglied (PG) vorhanden ist, welches den Wechsel zwischen den beiden Signalen steuert, daß eine weitere Schalteinrichtung (SW2) vorhanden ist, die während der Eichperioden das Ausgangssignal (U$_r$') des genannten Gliedes (A, PSR) auf das Subtraktionsglied (SP) schaltet und daß der Regler (INT, PSM) derart aufgebaut ist, daß sein während einer Eichperiode gewonnenes Ausgangssignal (U$_c$') erhalten bleibt für die nächste Meßperiode, in welcher das Ausgangssignal (U$_m$') des steuerbaren Gliedes (A, PSR) einem Glied (DVM) zum Zwecke der Anzeige oder der weiteren Signalverarbeitung zugeführt wird.

3. Krafmeßanordnung nach einem der Ansprüche 1 oder 2, dadurch gekennzeichnet, daß das genannte steuerbare Glied (A, PSR) aus einem Verstärker (A) und einem dahinter angeschlossenen phasenabhängigen Gleichrichter (PSR) besteht und daß der Regler (INT, PSM) und das genannte steuerbare Glied (A, PSR) derart aufgebaut sind, daß das Ausgangssignal (U$_c$') des Reglers (INT, PSM) während der Eichperiode die Phasenlage des genannten phasenabhängigen Gleichrichters derart steuert, daß das Ausgangssignal (U$_r$') des Gleichrichters mit der Referenzspannung (U$_{ref}$) übereinstimmt.

4. Krafmeßanordnung nach Anspruch 1, dadurch gekennzeichnet, daß die Feder (14) eine Blattfeder ist und die Gestalt eines "S" hat, welches in der vertikalen Richtung stark zusammengedrückt ist und ebene und parallele Kontaktflächen hat, die gegen gegenüberliegende Flächen der Krafteinleitungsarme (12, 13) des Kernes des Referenzgebers anliegen.

5. Krafmeßanordnung nach Anspruch 4, dadurch gekennzeichnet, daß die Feder (14) aus Elinvar-Material besteht, welches einen durch eine geeignete Wärmebehandlung erzeugten leicht temperaturabhängigen Elastizitätsmodul besitzt, welcher den Unterschied in der linearen Expansion zwischen der Feder (14) und den Krafteinleitungsarmen (12, 13) kompensiert.

**Revendications**

1. Dispositif de mesure de force magnétoélastique compensé en température, comprenant un transducteur de mesure (2—6, 2a—6a, 2b—6b) avec un circuit magnétique (1), portant au moins un enroulement d'excitation (10) et un enroulement de mesure (9), et comprenant un circuit de traitement de signal, caractérisé en ce que le dispositif de mesure de force comprend un transducteur de référence (C) constitué par la même matière que le transducteur de mesure et ayant la même configuration générale, la même longueur et la même largeur que le transducteur de mesure, à l'exception du fait qu'il comporte des branches d'application de force supplémentaires (12, 13), en ce qu'un ressort (14, 14a, 14b) est disposé entre ces branches d'application de force supplémentaires pour charger le transducteur de référence (C) avec une force qui ne varie pas sous l'effet de variations de température, en ce que le transducteur de référence (C) est disposé en bon contact thermique avec le transducteur de mesure (1), pour faire en sorte que les deux transducteurs soient à la même température, en ce que l'enroulement d'excitation (10), ou chacun d'eux, est conçu de façon à appliquer le même champ magnétique aux deux transducteurs, en ce que le circuit de traitement de signal comprend au moins un composant d'amplication commandé (A, PSR), et en ce que le circuit de traitement de signal est conçu de manière que, au moins pendant une période d'étalonnage, le signal de sortie ($U_r$) du transducteur de référence (C) soit appliqué à un composant d'amplification commandé (A, PSR), tandis que le signal de sortie ($U'_r$) de ce composant (A, PSR) est comparé avec une tension de référence ($U_{ref}$) provenant d'une source de tension de référence (B) dans un générateur de différence (SP), en ce que le signal d'écart provenant du générateur de différence (SP) est appliqué à un régulateur (INT, PSM) qui commande le composant commandé (A, PSR) de façon à amener le signal de sortie ($U'_r$) de ce composant (A, PSR) en conformité avec la tension de référence ($U_{ref}$), et en ce que, au moins pendant une période de mesure, le signal de sortie ($U_m$) du transducteur de mesure est appliqué à un composant d'amplification commandé (A, PSR), qui est commandé par le signal de sortie ($U'_c$) de ce régulateur (INT, PSM), grâce à quoi le signal de sortie ($U'_m$) constitue la valeur de mesure compensée en température.

2. Dispositif de mesure de force selon la revendication 1, caractérisé en ce que des moyens de commutation appropriés (SW1) sont conçus de façon à appliquer alternativement les signaux de sortie du transducteur de référence (C) et du transducteur de mesure au même composant commandé (A, PSR), en ce qu'un élément de commande (PG) est conçu de façon à commander l'alternance entre les signaux précités, en ce que des moyens de commutation supplémentaires (SW2) sont conçus de façon à appliquer, pendant les périodes d'étalonnage, le signal de sortie ($U'_r$) du composant précité (A, PSR) au générateur de différence (SP), et en ce que le régulateur (INT, PSM) est conçu de façon que son signal de sortie ($U'_c$), obtenu pendant une période d'étalonnage, soit maintenu pendant la période de mesure suivante, au cours de laquelle le signal de sortie ($U'_m$) du composant commandé (A, PSR) est appliqué à un élément (DVM) destiné à indiquer le signal ou à lui appliquer un traitement ultérieur.

3. Dispositif de mesure selon l'une des revendications 1 ou 2, caractérisé en ce que le composant commandé (A, PSR) consiste en un amplificateur (A) et en un redresseur sensible à la phase (PSR) connecté à la suite, et en ce que le régulateur (PSM, INT) et le composant commandé (A, PSR) sont conçus de façon que le signal de sortie ($U'_c$) du régulateur (PSM, INT) pendant les périodes d'étalonnage commande la position de phase du redresseur sensible à la phase, afin de donner au signal de sortie ($U'_r$) du redresseur une valeur égale à la tension de référence ($U_{ref}$).

4. Dispositif de mesure selon la revendication 1, caractérisé en ce que le ressort (14) est un ressort à lame et il a la forme d'un "S" fortement comprimé dans la direction verticale, avec des surfaces de contact planes et parallèles portant contre des surfaces opposées des branches d'application de force (12, 13) du circuit magnétique du transducteur de référence.

5. Dispositif de mesure de force selon la revendication 4, caractérisé en ce que le ressort (14) est constitué par une matière du type Elinvar à laquelle on donne, par un traitement thermique approprié, un module d'élasticité présentant une faible dépendance vis-à-vis de la température, qui compense la différence de dilatation linéaire entre le ressort (14) et les branches d'application de force (12, 13).

FIG.1

FIG. 2

FIG. 3

1

0 091 880

**FIG. 4**

**FIG. 5**

**FIG. 6**

$U_m$  SW1  $A$  PSR  SW2  $U_m'$  DVM

PG

$U_c'$  $U_r'$  $U_{ref}$  $B$

$U_c$  PSM  SP  INT

**FIG. 7**

$U_r'$

$U_{ref}$  $\alpha_0$  $\alpha$

40°
20°
0°

$U_m'$

$\alpha$

40°
20°
0°

2